# FASCICULE DE BREVET EUROPEEN

(11) **EP 3 580 519 B1**
(45) Date de publication et mention de la délivrance du brevet: **01.06.2022**
(21) Numéro de dépôt: 18707099.0
(22) Date de dépôt: 09.02.2018
(51) Int. Cl.: F41G 3/16, G05D 1/00

(54) **DISPOSITIF ET MÉTHODE DE SURVEILLANCE ET D'INTERVENTION**
VORRICHTUNG UND VERFAHREN ZUR ÜBERWACHUNG UND INTERVENTION
DEVICE AND METHOD FOR MONITORING AND INTERVENTION

(30) Priorité: 10.02.2017 FR 1751132
(43) Date de publication de la demande: 18.12.2019
(73) Titulaire: Desset, Samuel, 16200 Bourg Charente (FR)
(72) Inventeur: Desset, Samuel, 16200 Bourg Charente (FR)
(74) Mandataire: Ipside
(86) Numéro de dépôt international: PCT/FR2018/050314
(87) Numéro de publication internationale: WO 2018/146427

(56) Documents cités:
- US-A1- 2009 164 045
- US-A1- 2009 195 652
- US-A1- 2010 174 422
- US-A1- 2011 035 054
- US-A1- 2014 116 234
- US-A1- 2014 327 770

## Description

### DOMAINE TECHNIQUE

L'invention appartient au domaine des véhicules inhabités.

Plus particulièrement, l'invention appartient au domaine des véhicules terrestres inhabités télécommandés.

Plus particulièrement, l'invention appartient au domaine des véhicules terrestres inhabités, télécommandés et amenés à évoluer dans des environnements à risque d'agression.

### ETAT DE L'ART

L'intervention de forces armées, de l'ordre ou d'équipes d'intervention dans des environnements hostiles ou dangereux, par exemple attaque terroriste, émeute ou guérilla urbaine, est nécessairement associée à des risques, pouvant conduire à des pertes humaines. Les précautions et protections mises en œuvre dans de tels environnements conduisent à des limitations, par exemple des zones interdites ou des angles morts du champ de vision des individus amenés à intervenir dans ce type de milieu.

A titre d'exemple, lors d'une manifestation, des forces de sécurité au sol ne peuvent pas surveiller aisément la foule car leur champ de vision est rasant et limité latéralement au champ de vision de l'être humain. Lors d'une émeute ou d'une attaque terroriste, outre les tirs adverses de projectiles, les forces d'intervention sont également exposées au risque de tir croisé entre membres d'une même équipe.

Dans un autre exemple, des forces armées pénétrant dans une ville tenue par des forces ennemies se retrouvent prises pour cible par les forces ennemies positionnées en des points difficilement accessibles et prenables.

Afin d'assurer la sécurité des opérateurs, il est connu d'utiliser des drones pour accomplir les missions en milieu dangereux, voir par exemple le certificat d'utilité chinois numéro CN205239481 qui décrit un robot terrestre présentant un système de pilotage automatique à commande intelligente, et ayant des moyens pour observer et intervenir dans un milieu à risque. Cependant, la mise en œuvre d'un tel dispositif est automatique, or il peut être nécessaire d'avoir le contrôle du drone dans les situations d'urgence.

Outre le certificat d'utilité chinois cité plus haut, l'idée d'utiliser un drone pour intervenir dans des environnements dangereux est connue, par exemple de la demande de brevet coréenne numéro KR20150036955 qui décrit un simulateur de drone contrôlable à distance, disposant d'un système de retransmission des images d'un champ de bataille et d'un système de tir à distance. Le document US2014/116234A1 décrit un drone terrestre monté sur plate-forme élévatrice, le drone comportant des armes létales et étant contrôlé à distance.

Cependant, l'art antérieur ne décrit pas une méthode permettant de faire intervenir rapidement, en zone hostile, un drone muni d'un équipement adapté à la situation d'urgence.

La présente invention propose une solution à cette problématique.

### EXPOSE DE L'INVENTION

L'invention concerne un dispositif d'intervention destiné à être mis en œuvre dans un environnement hostile.

Le dispositif comporte :
- un drone terrestre opérable à distance comportant :
   - une base automotrice et autonome en énergie ;
   - un bras support solidaire de la base par une extrémité inférieure dudit bras support ;
   - une tête solidaire d'une extrémité supérieure dudit bras support ;
- un centre de commande séparé matériellement du drone et agencé pour permettre le pilotage à distance du drone par un téléopérateur dudit centre de commande ;
- un système de transmission de données dans un sens montant depuis le drone vers le centre de commande et dans un sens descendant depuis ledit centre de commande vers ledit drone.

Selon l'invention :
- la tête comporte :
   - au moins un système de perception d'environnement adapté à la reconstruction visuelle à champ large d'un environnement du drone ;
   - un ou plusieurs moyens d'action à champ étroit, chacun des moyens d'action agissant suivant une direction privilégiée d'une ligne de visée comprise dans le champ large de la reconstruction visuelle de l'environnement du drone, ladite ligne de visée étant orientable dans un repère lié à la tête ;
- le centre de commande comporte :
   - une surface d'affichage d'images ayant une forme sensiblement cylindrique, sphérique ou conique adaptée à la présentation de la reconstruction visuelle à champ large de l'environnement du drone ;
   - une plate-forme pour la visualisation de ladite surface d'affichage par les intervenants, ladite plate-forme étant adaptée pour permettre aux intervenants une visualisation depuis ladite plate-forme des images affichées sur ladite surface d'affichage ;
   - un ou plusieurs systèmes de visée portatifs présentant chacun une ligne de visée, chaque système de visée :
      - étant destiné à être manipulé par un opérateur situé sur la plate-forme et équipé dudit système de visée ;
      - commandant un seul et unique moyen d'action auquel il est associé ;
      - étant agencé pour désigner un point quelconque de la surface d'affichage ;
      - ledit système de visée étant par ailleurs pourvu d'une commande de validation du point désigné ;
les données dans le sens montant comportant des données du système de perception d'environnement, lesdites données reçues étant traitées pour reconstruire visuellement l'environnement du drone et afficher en temps réel ladite reconstruction sur la surface d'affichage ;
les données dans le sens descendant comportant des informations, transmises en temps réel, pour orienter l'au moins un moyen d'action associé à l'au moins un système de visée portatif pour pointer une cible dans l'environnement réel du drone correspondant à une cible correspondant au point désigné sur la surface d'affichage par le système de visée.

Un temps réel d'échange des données via le système de transmission de données est un intervalle temporel inférieur à un intervalle temporel minimal perceptible par les intervenants ainsi qu'à un intervalle temporel caractéristique de la dynamique du système.

Dans une forme de réalisation, la base et le bras support proviennent d'un véhicule militaire ou d'une plateforme élévatrice civile.

Dans une forme de réalisation, la base et le bras support constituent un sous-ensemble d'une plateforme élévatrice à bras télescopique, articulé ou coulissant.

Dans une forme de réalisation, le bras support et la tête sont reliés entre eux par un adaptateur.

Dans une forme de réalisation, le système de transmission de données met en œuvre une ou des liaisons filaires et ou une ou des liaisons radio, terrestre ou satellite.

Dans une forme de réalisation, l'au moins un système de perception de l'environnement comprend un capteur d'images et ou un capteur de distance à balayage.

Dans une forme de réalisation, l'au moins un système de perception d'environnement présente un angle de champ supérieur à 45 degrés et l'au moins un moyen d'action présente une ouverture angulaire d'effets inférieure à 10 degrés.

Dans une forme de réalisation, l'au moins un moyen d'action comporte au moins une arme, potentiellement létale.

Dans une forme de réalisation, l'au moins un moyen d'action comporte un capteur de vitesse du vent et ou un stabilisateur.

Dans une forme de réalisation, la tête est autonome en énergie.

Dans une forme de réalisation, le centre de commande comprend également un poste de chef des opérations et au moins un poste de surveillant.

Dans une forme de réalisation, au moins une partie de la surface d'affichage du centre de commande est sensiblement cylindrique et entoure la plate-forme d'intervenants.

Dans une forme de réalisation, la surface d'affichage du centre de commande comprend une partie ayant sensiblement la forme d'une coupole.

Dans une forme de réalisation, l'au moins un système de visée comporte un laser et ou un système de désignation de cible.

### BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.
La Figure 1 représente le drone terrestre et le centre de commande du dispositif selon l'invention, ainsi que leurs interactions, dans une forme de réalisation.
La Figure 2 représente le drone terrestre du dispositif selon l'invention dans la forme de réalisation de la Figure 1.
La Figure 3 représente le drone terrestre du dispositif selon l'invention dans une seconde forme de réalisation.
La Figure 4 représente le centre de commande selon l'invention dans la forme de réalisation de la Figure 1.
La Figure 5 représente le drone terrestre selon l'invention dans un premier mode de mise en œuvre.
La Figure 6 représente le drone terrestre selon l'invention dans un second mode de mise en œuvre.
La Figure 7 représente le drone terrestre selon l'invention dans un troisième mode de mise en œuvre.
La Figure 8 représente deux drones terrestres selon l'invention dans un quatrième mode de mise en œuvre.
La Figure 9 illustre les différentes étapes de la méthode de mise en œuvre du dispositif selon l'invention.

Sur les dessins, des éléments similaires assurant les mêmes fonctions, même de forme différente, portent le même repère.

### DESCRIPTION DETAILLEE

La description détaillée ci-dessous concerne des modes particuliers de réalisation de l'invention, mais celle-ci n'est pas limitée à ces seules formes de réalisation.

De la même manière, les valeurs numériques ne sont données qu'à titre d'exemple et ne sont en aucun cas limitatives de l'invention.

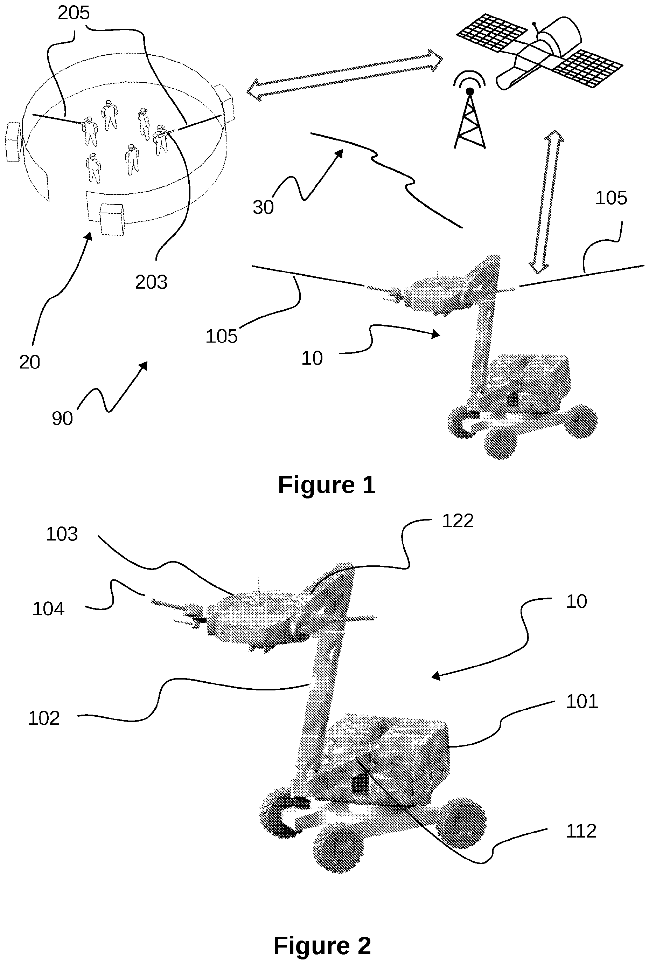

En référence à la Figure 1, le dispositif selon l'invention comporte :
- un drone 10 terrestre opérable à distance ;
- un centre de commande 20 ;
- un système de transmission de données 30 entre le drone 10 terrestre et le centre de commande 20.

L'expression « drone terrestre » est utilisée dans la description pour désigner un véhicule terrestre inhabité et télécommandé. Par la suite, le terme « drone » peut être utilisé seul pour désigner un « drone terrestre ».

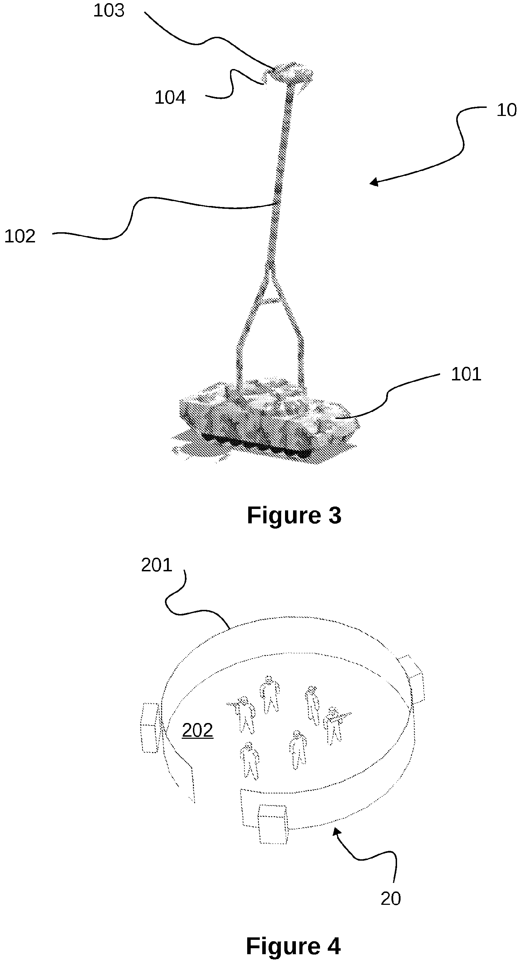

En référence aux Figures 2 et 3, le drone 10 comporte principalement :
- une base 101 automotrice et autonome en énergie ;
- un bras support 102 ;
- une tête 103.

La base 101 automotrice et le bras support 102 constitue un véhicule porteur pouvant se déplacer au sol.

Dans l'exemple de réalisation illustré sur les figures 1 et 2, la base 101 comporte :
- un châssis pourvu de quatre roues dont au moins deux roues d'un même essieu sont orientables et au moins une roue est motorisée. Comme il sera compris ultérieurement, pour des raisons de maniabilité de la base 101, avantageusement les quatre roues sont motorisées et orientables ;
- une tourelle montée pivotante autour d'un axe vertical sur le châssis ;
- un générateur de puissance, non visible sur les figures, délivrant une énergie sous une forme utilisable, par exemple mécanique et/ou hydraulique et/ou électrique, pour assurer la mobilité de la base 101 et pour alimenter en énergie tous les équipements et servitudes du drone 10 terrestre pour le rendre autant que possible autonome.

Dans la forme de réalisation illustrée sur la Figure 3, la base 101 est une tourelle d'un char de combat.

Le bras support 102 est solidaire, à une extrémité inférieure 112 dudit bras support, de la base 101 et la tête 103 est solidaire du bras support 102 à une extrémité supérieure 122 dudit bras support. Un élément d'interface principal de la tête 103 coopère avec un élément d'interface secondaire du bras support 102 pour former une interface mécanique et permettre la fixation de la tête audit bras support.

La tête 103 peut être adaptée à divers types d'engins communément utilisés dans l'industrie, et comportant un ensemble base et bras support, auquel bras support la tête 103 peut être fixée en remplacement, par exemple, d'une nacelle. A titre d'exemple non limitatif, une tête selon l'invention peut par exemple être adaptée à un ensemble base et bras support provenant d'une plateforme élévatrice mobile de personnel, par exemple nacelle télescopique, nacelle articulée, ou ciseaux tout terrain. Un tel ensemble base et bras support d'une plateforme élévatrice et, par analogie, l'ensemble base 101 et bras support 102 du drone 10 sont désignés dans la description par le terme « porteur » ou « véhicule porteur ». Dans la description, l'expression « plateforme élévatrice » est utilisée pour désigner un engin comprenant un porteur et une nacelle.

Avantageusement, un adaptateur peut être mis en place si nécessaire afin de pouvoir adapter l'élément d'interface principal à l'élément d'interface secondaire. La tête 103 peut ainsi être fixée sur des bras supports 102 présentant des éléments d'interface secondaires différents d'un bras à l'autre, en utilisant un adaptateur adéquat, sans modifier l'élément d'interface principal. De tels adaptateurs permettent de fixer la tête 103 à des bras supports de plateformes élévatrices équipées de nacelles et initialement destinées à, par exemple, de la manutention ou de l'élévation de personnel.

Une liaison mécanique de l'interface mécanique entre le bras support 102 et la tête 103 est telle qu'elle offre à ladite tête au moins un degré de liberté vis-à-vis dudit bras support. A titre d'exemple, la liaison mécanique entre le bras support 102 et la tête 103 peut-être une liaison pivot ou une liaison rotule.

Dans la configuration illustrée du bras support 102 articulé, il est possible de soulever la tête 103 jusqu'à des hauteurs pouvant atteindre quarante mètres ou plus au-dessus du sol, en utilisant par exemple un porteur d'une plateforme élévatrice de l'industrie.

Dans une autre forme de réalisation, le bras support 102 n'est pas articulé. Dans une forme alternative de réalisation, le bras support 102 est un bras télescopique. De manière générale, la longueur et le nombre de degrés de liberté du bras support 102 est adapté à l'environnement dans lequel le drone 10 est destiné à être mis en œuvre.

Telle qu'illustrée sur les Figures 1,2 et 3, la tête 103 a une forme sensiblement cylindrique à base polygonale.

Dans une forme de réalisation, la tête 103 est autonome en énergie, par exemple au moyen d'un groupe auxiliaire de puissance placé dans la tête.

Une interface de liaison entre le bras support 102 et la tête 103 permet de communiquer des ordres depuis le système de téléguidage vers la base 101 et le bras support 102, pour ordonner le déplacement de ladite base ou une reconfiguration dudit bras support. L'interface de liaison permet par ailleurs une transmission d'énergie depuis la base 101, par exemple depuis un générateur de puissance, vers la tête 103. L'interface de liaison peut par exemple permettre le passage de câbles entre la base 101, le bras support 102 et la tête 103.

La tête 103 comprend :
- au moins un système de perception de l'environnement adapté à la reconstruction visuelle à champ large d'un environnement du drone 10 et mettant en œuvre au moins un capteur d'environnement, le champ large permettant de visualiser une cible dans un environnement de ladite cible ;
- au moins un moyen d'action 104 à champ étroit agissant suivant une direction privilégiée d'une ligne de visée 105 comprise dans le champ large de la reconstruction visuelle de l'environnement du drone 10, le champ étroit permettant d'isoler une cible de l'environnement de ladite cible ;
- des moyens de diffusion d'informations, par exemple des haut-parleurs, un afficheur.

L'au moins un système de perception de l'environnement peut comporter par exemple un ou plusieurs :
- capteur, éventuellement panoramique ou presque, d'images du spectre visible, ou d'un autre spectre, par exemple l'infrarouge ;
- capteur de distance ;
- capteur acoustique ;
- capteur de température ;
- capteur de vitesse du vent, par exemple destiné à contribuer à une fonction de stabilisation du drone 10.

Dans une forme de réalisation, l'au moins un système de perception de l'environnement présente un angle de champ supérieur à quarante-cinq degrés.

L'au moins un moyen d'action 104 peut comporter par exemple :
- une arme à munition ;
- un système de désignation de cible ;
- un illuminateur ;
- un diffuseur acoustique ;
- un éjecteur, par exemple d'eau, de gaz lacrymogène.

Dans une forme de réalisation, l'au moins un moyen d'action 104 présente une ouverture angulaire d'effets inférieure à dix degrés, voire quasi nulle, par exemple dans le cas d'armes à munitions. L'ouverture angulaire d'effets est définie ici comme un maximum d'amplitude angulaire du champ étroit d'un moyen d'action 104 atteint sur l'ensemble des plans comprenant la ligne de visée 105 dudit moyen d'action.

Chacun de l'au moins un moyen d'action 104 comporte au moins un degré de liberté vis-à-vis de la tête 103 et est orientable dans un référentiel de ladite tête.

Avantageusement, le type et le nombre de capteurs d'environnement, le nombre de leurs degrés de liberté et leur emplacement sur la tête 103 permettent de balayer la totalité ou la quasi-totalité d'un site d'intervention du drone 10.

Sur les Figures 1, 2 et 3, la tête 103 est équipée de deux armes positionnées de manière diamétralement opposées et d'un capteur d'images dans le spectre visible ou non visible, non représenté. Les armes équipant la tête 103 peuvent aussi bien être létales que non létales. Des armes non létales peuvent être par exemple des armes équipées de balles en caoutchouc ou des balles à gel lacrymogène, des canons à eau.

L'au moins un moyen d'action 104 de la tête 103 est adapté à l'environnement dans lequel le drone 10 est amené à évoluer. Dans une forme alternative de réalisation, il peut par exemple comprendre une ou plusieurs lances à eau pour repousser des individus virulents.

En référence aux Figures 1 et 4, le centre de commande 20 comprend une surface d'affichage 201, ici un écran 201, ayant sensiblement la forme d'une rotonde, délimitant une plate-forme 202 sur laquelle se tiennent des intervenants. Dans les formes de réalisation illustrées, l'écran 201 est sensiblement cylindrique. Un projecteur non représenté permet la visualisation sur l'écran 201 de données captées et transmises par le drone 10 par le biais du système de transmissions de données 30. Les données transmises peuvent être par exemple des images acquises par le système de perception de l'environnement.

Dans une forme de réalisation, l'écran 201 du centre de commande 20 résulte d'un assemblage d'écrans élémentaires juxtaposés pour assurer une continuité des images affichées.

Dans une forme de réalisation, l'au moins un écran 201 a une forme sensiblement sphérique ou conique.

Préférentiellement, la hauteur de l'écran 201 dans les exemples illustrés permet une visualisation confortable pour un individu sur la plate-forme 202, c'est-à-dire sans distorsion des données pouvant amener à une mauvaise interprétation desdites données, et sans fatigue de l'individu, par exemple fatigue oculaire ou crampe. Pour une visualisation confortable, la plate-forme 202 peut également occuper un espace moins important que celui délimité par la rotonde, de sorte que la distance d'un intervenant à l'écran 201 est supérieure à une distance minimale quelle que soit sa position sur la plate-forme 202.

Les dimensions et la position de l'écran peuvent bien sûr être adaptées pour permettre aux intervenants une visualisation des données en station quelconque, par exemple couchée, debout ou accroupie.

La forme du centre de commande 20 n'est pas limitée à cette seule forme de réalisation. A titre d'exemple, dans une forme de réalisation non illustrée de l'invention, la tête 103 du drone 10 présente un ou plusieurs capteurs permettant des prises de vue de l'environnement dudit drone dans un champ visuel correspondant sensiblement à un angle solide de 2π stéradians. Dans cette forme de réalisation, l'écran 201 du centre de commande 20 présente avantageusement une partie ayant la forme d'un hémisphère ou d'un dôme. Dans une forme de réalisation alternative, le champ visuel du capteur du drone 10 est supérieur à un angle solide de 2π stéradians. Dans une autre forme de réalisation, une partie des images retransmises sont projetées sous la plate-forme 202.

Dans tous les cas, une superficie de la plate-forme et/ou une position relative de l'écran 201 par rapport à ladite plate-forme peuvent être adaptées pour permettre une visualisation suffisante et confortable de l'écran 201 par les intervenants, quelles que soient leurs positions respectives sur la plate-forme.

Dans l'exemple illustré de la Figure 4, le centre de commande 20 comprend :
- un poste de chef des opérations ;
- un poste de pilotage ;
- deux postes d'opérateurs ;
- deux postes de surveillants.

Le poste de pilotage est agencé pour permettre à un pilote de piloter le drone 10 terrestre à distance, grâce au système de transmission de données 30 permettant la transmission d'informations de pilotage dans un sens descendant depuis le centre de commande 20 vers le drone 10 et de données, visuelles ou non, envoyées par les capteurs du drone 10 dans un sens montant depuis ledit drone vers ledit centre de commande. Les images ainsi transmises permettent de rendre compte à un pilote occupant le poste de pilotage, de la position du drone 10, de son environnement, et des éventuelles limites à son déplacement, liées par exemple à la présence d'obstacles.

Des opérateurs occupant les postes d'opérateurs commandent l'au moins un moyen d'action 104. Les opérateurs sont chacun équipés d'un système de visée 203 portatif, par exemple un système équipé d'un laser. Chacun des systèmes de visée permet de commander simultanément un seul et unique moyen d'action 104 qui lui est associé. Une direction d'une ligne de visée 105 d'un moyen d'action 104 donné est associé à une direction d'une ligne de visée 205 donnée par le système de visée 203 portatif auquel ledit moyen d'action est associé. Une modification de l'orientation d'un système de visée 203, et donc de la direction de la ligne de visée 205 dudit système de visée portatif entraîne une modification de l'orientation du moyen d'action 104 et de sa direction de ligne de visée 105 associée de sorte que, lorsqu'un opérateur vise sur l'écran du centre de commande 20 l'image d'une cible retransmise par le capteur du drone 10, le moyen d'action 104 associé vise la cible réelle. Chaque système de visée 203 est également équipé d'un déclencheur permettant d'actionner le moyen d'action 104 associé à distance, par exemple permettant de tirer.

Chaque opérateur équipé d'un système de visée portatif est en mesure de se déplacer sur la plate-forme, ce qui lui permet si besoin de se placer, en fonction de ses centres d'intérêt et zones d'observation privilégiées à un instant donné, dans une position lui donnant une visibilité et un confort amélioré pour identifier et suivre une cible et décider de l'instant d'une action.

Avantageusement, l'au moins un système de perception de l'environnement comprend :
- un capteur de distance permettant d'évaluer la distance de la cible, par exemple capteur à balayage laser lidar :
- un capteur de vitesse du vent ;
et l'au moins un moyen d'action 104 comprend :
- un correcteur de trajectoire afin d'assurer une fonction de correction de trajectoire ;
- un stabilisateur, par exemple dans le cas d'une arme à feu, afin de compenser le recul lors du tir.

Le champ visuel d'un opérateur étant limité, en particulier lorsqu'il se concentre sur une cible, deux surveillants occupent chacun un poste de surveillant afin de couvrir des angles morts des opérateurs. Les surveillants peuvent ainsi rendre compte aux opérateurs d'événements notables se déroulant hors de leur champ de vision, notamment :
- observer en continu ;
- hiérarchiser les évènements observés ;
- transmettre des informations sur la situation aux opérateurs.

Avantageusement, un chef des opérations occupant le poste de chef des opérations supervise l'ensemble des opérations, en décidant du mouvement du drone 10 et du déclenchement des opérations, par exemple tirs.

Dans l'exemple de réalisation illustré, le pilote, les opérateurs, les surveillants et le chef des opérations sont debout sur un sol de la plate-forme 202.

Comme cela a déjà été mentionné précédemment, le système de transmission de données 30 permet la transmission des données entre le drone 10 et le centre de commande 20, comme schématisé sur la Figure 1, en assurant:
- dans un sens montant, le transfert de données du drone 10 vers le centre de commande 20, par exemple les données du système de perception d'environnement ;
- dans une sens descendant, le transfert de données du centre de commande 20 vers le drone 10, par exemple ordres de pilotage ou de déclenchement des moyens d'action 104.

Le système de transmission de données 30 peut être une liaison filaire, une liaison radio ou une liaison satellite, ou plus généralement toute combinaison de ressources pouvant être mises en œuvre dans un système de communication, y compris pour assurer la continuité des liaisons et la sécurité par des liaisons cryptées pour éviter le piratage et le détournement du drone 10.

Le dispositif selon l'invention peut être mis en œuvre dans le cadre de missions variées auxquelles l'au moins un système de perception de l'environnement et l'au moins un moyen d'action sont adaptés.

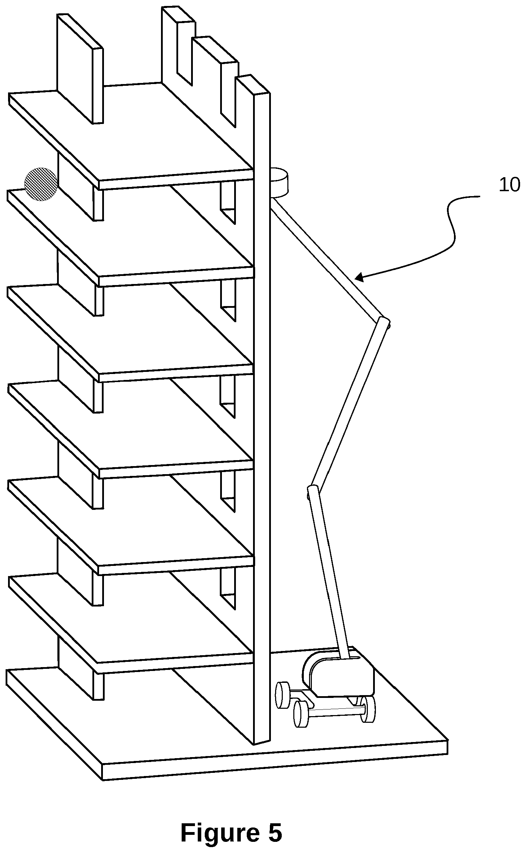

Dans un premier mode de mise en œuvre illustré sur la Figure 5, le dispositif est mis en œuvre dans un contexte de délogement de terroristes. Dans ce mode de mise en œuvre, un terroriste est réfugié au cinquième étage d'un immeuble. Le drone 10 selon l'invention est placé à proximité immédiate de l'immeuble, et la tête 103 est élevée à l'aide du bras articulé 102 à hauteur du cinquième étage. La position et les capteurs de la tête 103, orientables grâce aux systèmes de visée 203 manipulés par les opérateurs du centre de commande 20, permettent ainsi d'avoir une vision rapprochée par rapport à celle qu'aurait un tireur isolé posté sur un bâtiment voisin, tout en assurant la sécurité de forces d'intervention, puisque le drone 10 est commandé depuis le centre de commande 20 situé à une distance suffisamment importante du site d'intervention. Un opérateur peut ainsi voir depuis le centre de commande 20 l'intérieur d'un appartement dans lequel le terroriste est réfugié. L'au moins un moyen d'action 104 de la tête 103 est adapté à la situation, il peut s'agir par exemple d'un d'une arme létale suffisante pour neutraliser le terroriste à travers des fenêtres de l'appartement.

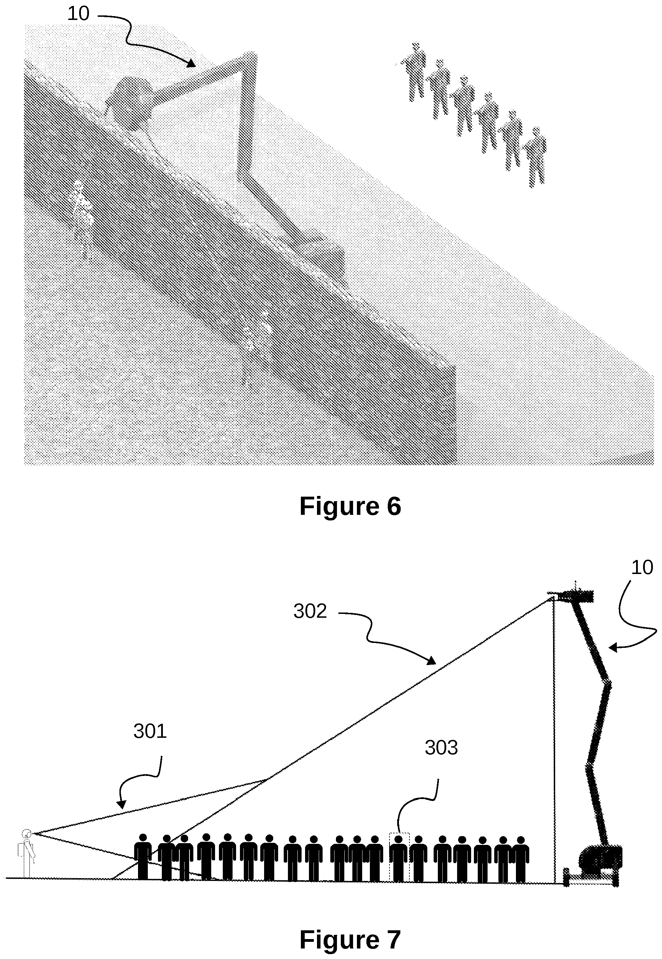

Dans un second mode de mise en œuvre illustré sur la Figure 6, le drone 10 est mis en œuvre dans un contexte potentiellement dangereux pour des forces de l'ordre, par exemple de type émeute. Dans le mode de mise en œuvre illustré, des individus dangereux sont cachés derrière un côté d'un mur. Le drone 10, placé de l'autre côté du mur, est dans une configuration telle que la tête 103 passe par-dessus le mur, permettant d'inspecter une zone non visible par les forces de l'ordre, et ainsi de contrôler la présence des individus dangereux, ainsi que par exemple leur comportement. L'orientation de la tête 103 et par conséquent le champ de vision restitué par les capteurs peut être modifié par réglage du bras support 102, par exemple en hauteur. L'orientation d'un capteur peut également être modifiée par l'opérateur qui lui est associé. L'au moins un moyen d'action 104 peut comprendre des armes létales ou non, permettant ensuite de neutraliser les individus en fonction de leur dangerosité. La sécurité des forces de l'ordre est ainsi assurée.

Dans un troisième mode de mise en œuvre illustré sur la Figure 7, le drone 10 est essentiellement utilisé pour une mission de surveillance d'une foule, par exemple dans le cadre d'une manifestation civile. Le bras support 102 est étendu dans une configuration telle que la tête 103 est élevée, par exemple pour dominer la scène à surveiller, à une position correspondant sensiblement à une hauteur maximale atteignable par ladite tête. Dans cette configuration, le champ de vision du drone 10 permet de surveiller de manière efficace la foule, comme le montre la comparaison entre un champ de vision rasant 301 d'un agent de surveillance au sol et le champ de vision plongeant 302 du drone 10 selon l'invention. L'individu 303 ne peut par exemple pas être vu par l'agent au sol, mais est repérable depuis le centre de commande 20 pilotant le drone 10.

En cas d'identification d'une menace, un moyen d'action 104 adapté permet de la neutraliser, par exemple grâce à des balles en caoutchouc ou du gel lacrymogène.

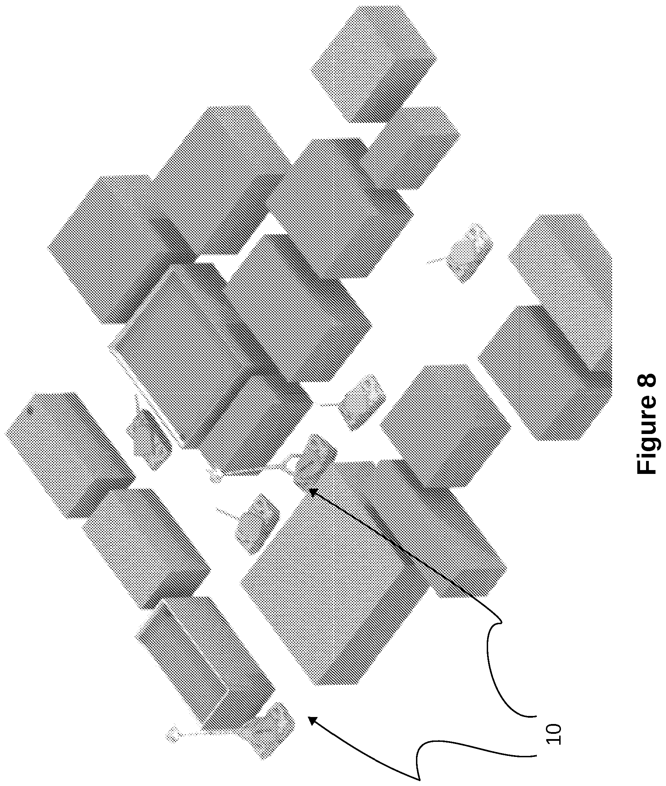

Dans une quatrième mode de mise en œuvre illustré sur la Figure 8, deux drones 10 selon l'invention assurent une surveillance d'un quartier et une interception au cours d'une guérilla urbaine. Une mobilité et une position dominante des têtes 103 des drones 10 permettent des angles de vue et de tirs non réalisables avec les techniques actuelles.

Ainsi, le dispositif 90 selon l'invention permet d'assurer la sécurité d'équipes d'intervention, par exemple forces de l'ordre, équipes de secours, équipes de sûreté, en déportant des moyens d'observation, des moyens de frappe, des moyens d'action ou des moyens de mesure. Le dispositif 90 peut être utilisé aussi bien en remplacement d'une équipe d'intervention qu'en appui.

Le dispositif 90 peut donc être utilisé pour des missions de protection et d'intervention.

Le dispositif permet notamment :
- de hiérarchiser de manière simple et intuitive observation, décision et action ;
- d'avoir un champ visuel élargi d'une scène, par exemple une manifestation, par rapport à un, voire plusieurs membres d'une équipe de surveillance et d'intervention ;
- d'éviter d'exposer les opérateurs à des risques tels que les balles perdues et les tirs accidentels ainsi que des dangers qu'ils ont la charge d'éliminer ;
- de présenter un effet dissuasif ;
- un déploiement rapide à moindre coût.

Un avantage du dispositif selon l'invention est que la tête du drone est adaptable à divers types d'engins présentant une base et un bras support, par exemple des plateformes élévatrices motorisées de type industriel.

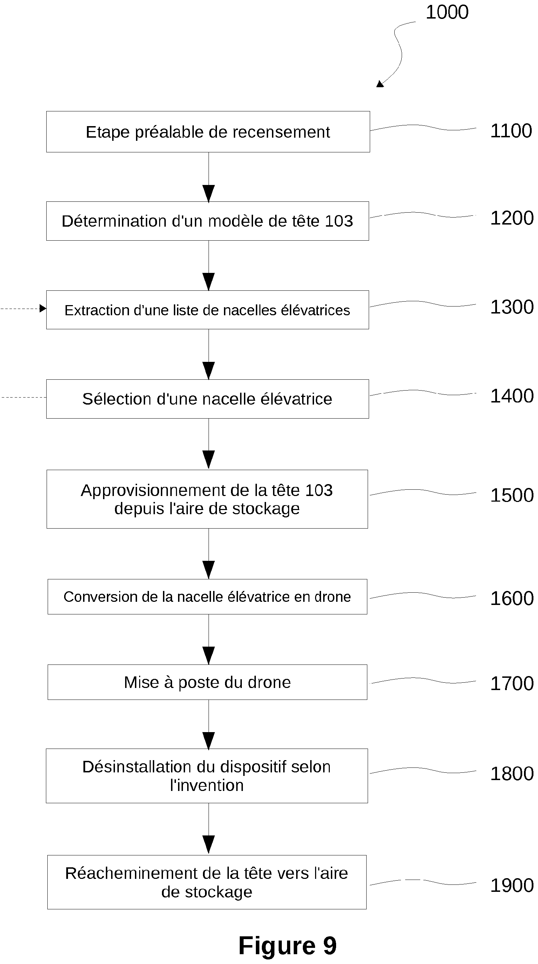

En référence à la Figure 9, l'invention concerne également une méthode 1000 de surveillance et d'intervention, permettant la mise en œuvre rapide, dans un environnement hostile et pouvant compromettre la sécurité d'opérateurs dans un tel environnement, d'un dispositif 90 selon l'invention adapté à l'environnement et apte à être mis en œuvre dans le cadre d'un engagement sur un site d'intervention.

On entend par site d'intervention un périmètre géographique dans lequel le drone du dispositif peut être amené à se trouver lors de sa mission. Un site d'intervention peut par exemple être un quartier, dans lequel se trouve un immeuble servant de refuge à un ou plusieurs terroristes. Il peut également s'agir d'une place sur laquelle est réunie une foule pour une manifestation. En pratique, le site d'intervention désigne un périmètre restreint, dans la mesure où le drone 10, lors de sa mise en poste est peu amené à se déplacer au sol.

Au cours d'une étape préalable 1100 de la méthode selon l'invention, des plateformes élévatrices comportant une base mobile, un bras support similaire à ceux décrits dans la présente demande de brevet, ainsi qu'une nacelle démontable fixée à une extrémité supérieure dudit bras support, et situées sur un territoire d'intérêt sur lequel se trouve le site d'intervention, sont recensées dans une base de données de nacelles élévatrices.

La base mobile et le bras support forment un véhicule porteur auquel est fixée la nacelle.

On entend par territoire d'intérêt un territoire élargi sur lequel un drone 10 est susceptible d'intervenir selon la méthode 1000 de la présente invention. Un territoire d'intérêt peut être par exemple une région ou un pays. Les plateformes élévatrices sont couramment rencontrées dans l'industrie, par exemple parmi les appareils de chantier ou de manutention.

Au cours de cette étape préalable 1100, la localisation d'une plateforme élévatrice, ainsi que l'élément d'interface secondaire permettant la fixation de la nacelle sur le bras support, sont référencés. Le référencement identifie avantageusement, outre l'emplacement de garage de la plateforme élévatrice, des caractéristiques techniques telles que ses performances.

Egalement, au cours de cette étape préalable 1100, la base de données est mise à jour régulièrement, par exemple dès qu'une nouvelle plateforme élévatrice est amenée à être utilisée, par exemple sur un chantier. De la même manière, la base de données est actualisée dès qu'un paramètre lié à une plateforme élévatrice, par exemple sa localisation, change, ou encore lorsqu'une plateforme élévatrice est mise hors service et devient inutilisable, auquel cas ladite plateforme élévatrice est enlevée de la base de données.

Avantageusement, une cartographie en temps réel, au moins régulièrement mise à jour, est réalisée, permettant de visualiser la localisation des plateformes élévatrices référencées sur le territoire d'intérêt, par exemple une ville, une région ou un pays.

Un intérêt d'un référencement dans une base de données de plateformes élévatrices disponibles sur un territoire d'intérêt est de permettre une mise en œuvre rapide d'un drone 10 selon la présente méthode sur un site d'intervention lorsque cela est nécessaire, dans la mesure où ladite base de données permet d'identifier les plateformes élévatrices disponibles les plus proches dudit site d'intervention.

Au cours d'une étape initiale de détermination 1200, le modèle de tête 103 de drone 10 à utiliser dans le contexte de la mission est déterminé. Un modèle de tête 103 est défini notamment, mais non exclusivement, par ses moyens d'action 104.

La méthode 1000 selon l'invention comprend ensuite une étape d'extraction 1300 depuis la base de données d'une liste de plateformes élévatrices compatibles avec le modèle de tête 103 déterminé à l'étape de détermination 1200, et situées en proximité du site d'intervention. Cette étape débute lors de la survenue d'un évènement nécessitant la mise en œuvre du dispositif selon l'invention. Cette identification est avantageusement facilitée par la mise en place lors de l'étape préalable 1100 d'une cartographie de localisation de plateformes élévatrices.

La plateforme élévatrice la plus proche du site d'intervention est ensuite sélectionnée 1400. Ladite plateforme élévatrice est définitivement sélectionnée si elle vérifie des conditions de disponibilité et d'opérabilité. Dans le cas contraire, cette plateforme élévatrice est neutralisée et le même test est réalisé avec la seconde plateforme élévatrice la plus proche du site d'intervention. Dans le cas où aucune des plateformes élévatrices de la liste de plateformes élévatrices ne vérifie l'une des conditions de disponibilité et d'opérabilité, l'étape 1300 est reprise en élargissant le périmètre.

La plateforme élévatrice n'est par exemple pas disponible si elle a été retirée du lieu où elle est référencée. Elle n'est par exemple pas opérable si l'élément d'interface secondaire du bras support ne peut pas coopérer avec l'élément d'interface primaire de la tête 103.

Afin de limiter les problèmes d'opérabilité liés au mode de fixation, différents modèles de tête présentant chacun un élément d'interface primaire différent peuvent être envisagés pour augmenter les probabilités d'avoir un modèle de tête pouvant coopérer avec l'élément d'interface secondaire de la plateforme élévatrice sélectionnée. Egalement, un ensemble d'adaptateurs peut être prévu, permettant de relier un unique élément d'interface primaire de tête 103 à une pluralité d'éléments d'interface secondaire couramment rencontrés dans le domaine des plateformes élévatrices.

La méthode 1000 selon l'invention comprend ensuite une étape d'approvisionnement 1500, au cours de laquelle étape d'approvisionnement une tête 103 du drone 10 selon l'invention est acheminée depuis une aire de stockage de têtes 103 sur le site d'intervention. La tête 103 peut par exemple être acheminée par camion ou tout autre moyen de transport, terrestre, naval ou aérien permettant d'acheminer rapidement ladite tête sur le site d'intervention.

Avantageusement, l'aire de stockage comporte des têtes 103 selon l'invention, lesdites têtes présentant éventuellement des moyens d'action 104 et des moyens de fixation différents d'une tête 103 à l'autre, et éventuellement une pluralité d'adaptateurs tel que décrit plus haut. Avantageusement, une pluralité d'aires de stockage peuvent être mis en place, chaque aire de stockage étant destinée à couvrir une zone, c'est-à-dire susceptible d'avoir une tête 103 acheminée à n'importe quel endroit de ladite zone pour être installée sur un porteur d'une plateforme élévatrice, ladite zone couvrant par exemple un rayon de cent kilomètres autour de ladite aire de stockage. Les têtes 103 retenues pour appartenir à une aire de stockage peuvent être sélectionnées en fonction des types de plateformes élévatrices présentes dans la zone de l'aire de stockage. Pour chaque aire de stockage, la variété de têtes 103 ayant des éléments de fixation et des moyens d'action différents ainsi que le nombre de têtes permet d'assurer la disponibilité d'une tête 103 pour tout type de mission, le nombre de têtes étant fonction de la probabilité d'intervention dans la zone couverte par l'aire de stockage.

La plateforme élévatrice sélectionnée est ensuite convertie 1600. La tête 103 est ensuite installée sur le bras support 102 du porteur de la plateforme élévatrice, après enlèvement de la nacelle présente initialement sur le bras support 102. Lorsque la tête 103 est installée, la base 101, le bras support 102 et ladite tête forment un drone 10 selon l'invention. La tête 103 comprenant les élément nécessaires au téléguidage du drone 10, l'installation de la tête 103 permet de commander ledit drone ainsi formé depuis un centre de commande 20 tel que décrit précédemment, ou depuis un centre de pilotage local, en particulier pour un pré-positionnement dudit drone. Les interfaces mécanique et de liaison entre le bras support 102 et la tête 103 permettent notamment de transmettre les ordres de déplacement de la base de l'engin reçus grâce au système de téléguidage.

Une fois la tête 103 convertie 1600, le drone 10 peut être mis à poste 1700 par exemple selon l'un des modes de mise en œuvre décrits plus haut.

Les missions du drone 10 étant diverses, l'aire de stockage contient avantageusement des têtes 103 ayant des moyens d'action 104 différents d'une tête 103 à une autre, par exemple : arme à feu, arme de neutralisation, lance à eau. Dans ce dernier cas, la lance à eau peut être reliée à une borne incendie, lors de la mise à poste du drone 10 selon la méthode 1000 décrite ici.

Lorsque la mission a été menée, abandonnée ou a avorté, la tête 103 est désinstallée au cours d'une étape 1800 de désinstallation du drone 10. La nacelle initiale est replacée sur le bras support 102 du porteur de la plateforme élévatrice.

Enfin, dans une étape 1900, la tête 103 est réacheminée dans l'aire de stockage.

En raison du nombre et de la répartition de plateformes élévatrices effectivement disponibles en raison d'un usage industriel répandu, l'avantage de cette méthode est qu'elle permet d'agir rapidement, dans divers contextes de missions d'inspection, de surveillance et d'intervention, dans des environnements hostiles, grâce à l'adaptabilité des têtes 103 du drone 10 selon l'invention à divers types de plateformes élévatrices existants.

Outre les avantages liés au dispositif et évoqués précédemment, cette méthode permet une bonne réactivité de forces de l'ordre en cas de situation d'urgence, et nécessite peu de moyens, puisque les éléments nécessaires au montage et à la mise à poste du drone 10, exceptée la tête 103, par exemple borne incendie et plateforme élévatrice, se trouvent dans la zone ou à proximité de la zone à risque.

## Revendications

1. Dispositif d'intervention (90) destiné à être mis en œuvre dans un environnement hostile, comportant :
- un drone (10) terrestre opérable à distance comportant :
• une base (101) automotrice et autonome en énergie ;
• un bras support (102) solidaire de ladite base par une extrémité inférieure (112) dudit bras support ;
• une tête (103) solidaire d'une extrémité supérieure (122) dudit bras support ;
- un centre de commande (20) séparé matériellement du drone (10) et agencé pour permettre le pilotage à distance dudit drone par un téléopérateur dudit centre de commande ;
- un système de transmission de données (30) dans un sens montant depuis le drone (10) vers le centre de commande (20) et dans un sens descendant depuis ledit centre de commande vers ledit drone ;
**caractérisé en ce que** :
- la tête (103) comporte :
• au moins un système de perception d'environnement adapté à la reconstruction visuelle à champ large d'un environnement du drone (10) ;
• un ou plusieurs moyens d'action (104) à champ étroit, chacun des moyens d'action (104) agissant suivant une direction privilégiée d'une ligne de visée (105) comprise dans le champ large de la reconstruction visuelle de l'environnement du drone (10), ladite ligne de visée étant orientable dans un repère lié à la tête (103) ;
- le centre de commande (20) comporte :
• une surface d'affichage (201) d'images ayant une forme sensiblement cylindrique, sphérique ou conique adaptée à la présentation de la reconstruction visuelle à champ large de l'environnement du drone (10) ;
• une plate-forme (202) pour la visualisation de ladite surface d'affichage par les intervenants; la dite plate-forme étant adaptée pour permettre aux intervenants une visualisation depuis la dite plate-forme des images affichées sur ladite surface d'affichage;
• plusieurs systèmes de visée (203) portatifs présentant chacun une ligne de visée (205), chaque système de visée (203) :
- étant destiné à être manipulé par un opérateur situé sur la plate-forme (202) et équipé dudit système de visée ;
- commandant un seul et unique moyen d'action (104) auquel il est associé ;
- étant agencé pour désigner un point quelconque de la surface d'affichage (201) ;
- ledit système de visée étant par ailleurs pourvu d'une commande de validation du point désigné ;
les données dans le sens montant comportant des données du système de perception d'environnement, lesdites données reçues étant traitées pour reconstruire visuellement l'environnement du drone (10) et afficher en temps réel ladite reconstruction sur la surface d'affichage (201) ;
les données dans le sens descendant comportant des informations, transmises en temps réel, pour orienter l'au moins un moyen d'action (104) associé à l'au moins un système de visée (203) portatif pour pointer une cible dans l'environnement réel du drone (10) correspondant à une cible correspondant au point désigné sur la surface d'affichage par le système de visée (203).

2. Dispositif d'intervention (90) selon la revendication 1 **caractérisée en ce que** la base (101) et le bras support (102) proviennent d'un véhicule militaire ou d'une plateforme élévatrice civile.

3. Dispositif d'intervention (90) selon la revendication 1 ou la revendication 2 **caractérisé en ce que** le bras support (102) et la tête (103) sont reliés entre eux par un adaptateur.

4. Dispositif d'intervention (90) selon l'une quelconque des revendications précédentes **caractérisé en ce que** le système de transmission de données (30) met en œuvre une ou des liaisons filaires et ou une ou des liaisons radio, terrestre ou satellite.

5. Dispositif d'intervention (90) selon l'une quelconque des revendications précédentes **caractérisé en ce que** l'au moins un système de perception de l'environnement comprend un capteur d'images et ou un capteur de distance à balayage.

6. Dispositif d'intervention (90) selon l'une quelconque des revendications précédentes **caractérisé en ce que** l'au moins un système de perception d'environnement présente un angle de champ supérieur à 45 degrés et l'au moins un moyen d'action (104) présente une ouverture angulaire d'effets inférieure à 10 degrés.

7. Dispositif d'intervention (90) selon l'une quelconque des revendications précédentes, **caractérisé en ce que** l'au moins un moyen d'action (104) comporte au moins une arme, potentiellement létale.

## Patentansprüche

1. Interventionsvorrichtung (90), die dazu bestimmt ist, in einer feindlichen Umgebung eingesetzt zu werden, umfassend:
- eine terrestrische Drohne (10), die von der Ferne aus betrieben werden kann, umfassend:
• eine selbstfahrende und energieautarke Basis (101);
• einen Stützarm (102), der durch ein unteres Ende (112) des Stützarms an der Basis befestigt ist;
• einen Kopf (103), der an einem oberen Ende (122) des Stützarms befestigt ist;
- ein Steuerzentrum (20), das von der Drohne (122) physisch getrennt und eingerichtet ist, um die Lenkung der Drohne aus der Ferne durch einen aus der Ferne steuernden Bediener des Steuerzentrums zu gestatten;
- ein Datenübertragungssystem (30) in einer Aufwärtsrichtung von der Drohne (10) in Richtung des Steuerzentrums (20) und in einer Abwärtsrichtung von dem Steuerzentrum in Richtung der Drohne;
**dadurch gekennzeichnet, dass**:
- der Kopf (103) Folgendes umfasst:
• mindestens ein Umgebungswahrnehmungssystem, das für die großflächige visuelle Rekonstruktion einer Umgebung der Drohne (10) ausgelegt ist;
• ein oder mehrere Aktionsmittel (104) mit schmalem Feld, wobei jedes der Aktionsmittel (104), die bezüglich einer Vorzugsrichtung einer Sichtlinie (105) agieren, im weiten Feld der visuellen Rekonstruktion der Umgebung der Drohne (10) enthalten ist, wobei die Sichtlinie in einem verbundenen Bezugspunkt am Kopf (103) schwenkbar ist;
- wobei das Steuerzentrum (20) Folgendes umfasst:
• eine Anzeigefläche (201) von Bildern mit einer im Wesentlichen zylindrischen, kugelförmigen oder konischen Form, die für die visuelle Weitfeld-Rekonstruktion der Umgebung der Drohne (10) ausgelegt ist;
• eine Plattform (202) zur Visualisierung der Anzeigefläche durch die Beteiligten; wobei die Plattform ausgelegt ist, um den Beteiligten eine Visualisierung von dieser Plattform aus der auf der Anzeigefläche angezeigten Bilder zu ermöglichen;
• mehrere tragbare Zielsysteme (203), die jeweils eine Sichtlinie (205) aufweisen, wobei jedes Zielsystem (203) :
- dazu bestimmt ist, von einem auf der Plattform (202) befindlichen und mit dem Zielsystem ausgestatteten Bediener manipuliert zu werden;
- ein einziges Aktionsmittel (104) kontrolliert, dem es zugeordnet ist;
- angeordnet ist, um einen beliebigen Punkt auf der Anzeigefläche (201) zu bezeichnen;
- wobei das Zielsystem ferner mit einem Befehl zum Bestätigen des bezeichneten Punktes versehen ist;
wobei die Daten in der Aufwärtsrichtung Daten von dem Umgebungswahrnehmungssystem umfassen, wobei die empfangenen Daten verarbeitet werden, um die Umgebung der Drohne (10) visuell zu rekonstruieren und die Rekonstruktion in Echtzeit auf der Anzeigefläche (201) anzuzeigen;
wobei die Daten in der Abwärtsrichtung in Echtzeit übertragene Informationen umfassen, um das mindestens eine Aktionsmittel (104), das dem mindestens einen tragbaren Zielsystem (203) zugeordnet ist, zum Richten eines Ziels in der realen Umgebung der Drohne (10) entsprechend einem Ziel entsprechend dem auf der Anzeigefläche durch das Zielsystem (203) bezeichneten Punkt auszurichten.

2. Interventionsvorrichtung (90) nach Anspruch 1, **dadurch gekennzeichnet, dass** die Basis (101) und der Stützarm (102) an einem Militärfahrzeug oder an einer zivilen Hebeplattform vorgesehen ist.

3. Interventionsvorrichtung (90) nach Anspruch 1 oder Anspruch 2, **dadurch gekennzeichnet, dass** der Stützarm (102) und der Kopf (103) durch eine Adaptervorrichtung miteinander verbunden sind.

4. Interventionsvorrichtung (90) nach einem der vorhergehenden Ansprüche, **dadurch gekennzeichnet, dass** das Datenübertragungssystem (30) eine oder mehrere Drahtverbindungen und oder eine oder mehrere Funk-, Land- oder Satellitenverbindungen implementiert.

5. Interventionsvorrichtung (90) nach einem der vorhergehenden Ansprüche, **dadurch gekennzeichnet, dass** das mindestens eine Umgebungswahrnehmungssystem einen Bildsensor und oder einen Abstandsabtastsensor umfasst.

6. Interventionsvorrichtung (90) nach einem der vorhergehenden Ansprüche, **dadurch gekennzeichnet, dass** das mindestens eine Umgebungswahrnehmungssystem einen ein Umgebungswahrnehmungssystem einen Feldwinkel von mehr als 45 Grad aufweist und das mindestens eine Aktionsmittel (104) eine Wirkungswinkelöffnung von weniger als 10 Grad aufweist.

7. Interventionsvorrichtung (90) nach einem der vorhergehenden Ansprüche, **dadurch gekennzeichnet, dass** das mindestens eine Aktionsmittel (104) mindestens eine potenziell tödliche Waffe umfasst.

## Claims

1. Intervention device (90) intended to be used in a hostile environment, including:
- a remotely operable terrestrial drone (10) including:
• a self-propelled energy-independent base (101);
• a support arm (102) secured to said base by a bottom end (112) of said support arm;
• a head (103) secured to a top end (122) of said support arm;
- a control centre (20) physically separate from the drone (10) and arranged for enabling said drone to be remotely controlled by a remote operator of said control centre;
- a system (30) for transmitting data in an uplink direction from the drone (10) to the control centre (20) and in a downlink direction from said control centre to said drone;
**characterised in that**:
- the head (103) includes:
• at least one environment perception system adapted for wide-field visual reconstruction of an environment of the drone (10);
• one or more narrow-field action means (104), each of the action means (104) acting in a privileged direction of a line of sight (105) included in the broad field of the visual reconstruction of the environment of the drone (10), said line of sight being orientable in a reference frame linked to the head (103);
- the control centre (20) includes:
• a surface (201) displaying images having a substantially cylindrical, spherical or conical shape adapted for presenting the wide-field visual reconstruction of the environment of the drone (10);
• a platform (202) for viewing of said display surface by the participants; said platform being adapted for allowing the participants viewing from said platform of the images displayed on said display surface;
• a plurality of portable sighting systems (203) each having a line of sight (205), each sighting system (203) :
- being intended to be manipulated by an operator located on the platform (202) and equipped with said sighting system;
- controlling a sole and single action means (104) with which it is associated;
- being arranged for designating any point on the display surface (201);
- said sighting system moreover being provided with a command for validating the designated point;
the data in the uplink direction including data of the environment perception system, said received data being processed to visually reconstruct the environment of the drone (10) and to display in real time said reconstruction on the display surface (201);
the data in the downlink direction including information, transmitted in real time, for orienting the at least one action means (104) associated with the at least one portable sighting system (203) for pointing to a target in the real environment of the drone (10) corresponding to a target corresponding to the point designated on the display surface by the sighting system (203).

2. Intervention device (90) according to claim 1, **characterised in that** the base (101) and the support arm (102) come from a military vehicle or from a civil lifting platform.

3. Intervention device (90) according to claim 1 or claim 2, **characterised in that** the support arm (102) and the head (103) are connected together by an adapter.

4. Intervention device (90) according to any one of the preceding claims, **characterised in that** the data transmission system (30) uses one or more cable connections and one or more radio, terrestrial or satellite links.

5. Intervention device (90) according to any one of the preceding claims, **characterised in that** the at least one environment perception system comprises an image sensor and/or a scanning remote sensor.

6. Intervention device (90) according to any one of the preceding claims, **characterised in that** the at least one environment perception system has a field angle greater than 45 degrees and the at least one action means (104) has an angular aperture of effects of less than 10 degrees.

7. Intervention device (90) according to any one of the preceding claims, **characterised in that** the at least one action means (104) includes at least one potentially lethal weapon.
